(19)

**Europäisches Patentamt**
**European Patent Office**
**Office européen des brevets**

(11)　**EP 2 904 543 B1**

(12)　# FASCICULE DE BREVET EUROPEEN

(45) Date de publication et mention
de la délivrance du brevet:
**21.06.2017　Bulletin 2017/25**

(51) Int Cl.:
***G06K 9/00*** *(2006.01)*　　***G06T 7/00*** *(2017.01)*

(21) Numéro de dépôt: **13773670.8**

(22) Date de dépôt: **30.09.2013**

(86) Numéro de dépôt international:
**PCT/EP2013/070330**

(87) Numéro de publication internationale:
**WO 2014/053437 (10.04.2014 Gazette 2014/15)**

(54) **PROCÉDÉ DE COMPTAGE DE PERSONNES POUR APPAREIL STÉRÉOSCOPIQUE ET APPAREIL STÉRÉOSCOPIQUE DE COMPTAGE DE PERSONNES CORRESPONDANT**

VERFAHREN ZUM ZÄHLEN VON PERSONEN FÜR EIN STEREOSKOPISCHES GERÄT UND ENTSPRECHENDES GERÄT ZUM ZÄHLEN VON PERSONEN

METHOD FOR COUNTING PERSONS FOR A STEREOSCOPIC DEVICEE AND CORRESPONDING STEREOSCOPIC DEVICE FOR COUNTING PERSONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:　**03.10.2012　FR 1202632**

(43) Date de publication de la demande:
**12.08.2015　Bulletin 2015/33**

(73) Titulaire: **QUANTAFLOW**
**14600 Honfleur (FR)**

(72) Inventeurs:
• **THURIEZ, Sébastien**
**F-94000 Creteil (FR)**
• **BOUDARRAT, Nabil**
**F-94270 Le Kremlin Bicetre (FR)**

(74) Mandataire: **Coudray, Pascal André Alain et al**
**Cabinet Le Guen Maillet**
**5, place Newquay**
**B.P. 70250**
**35802 Dinard Cedex (FR)**

(56) Documents cités:
**US-A1- 2005 031 166**

• **DARRELL T ET AL: "Robust, real-time people tracking in open environments using integrated stereo, color, and face detection", VISUAL SURVEILLANCE, 1998. PROCEEDINGS., 1998 IEEE WORKSHOP ON, 2 janvier 1998 (1998-01-02), pages 26-32, XP010261503, BOMBAY, INDIA 2 JAN. 1998 DOI: 10.1109/WVS.1998.646017 ISBN: 978-0-8186-8320-6**
• **"Chapter 11 Stereo Correspondance" In: Richard Szelisky: "Computer Vision", 1 janvier 2010 (2010-01-01), Springer, XP002698134, pages 467-504, le document en entier**
• **"Chapter 6 Image Matching Algorithms" In: Boguslaw Cyganek et J. Paul Siebert: "An Introduction to 3D Computer Vision Techniques and Algorithms", 1 janvier 2008 (2008-01-01), Wiley, XP002698135, pages 193-322, le document en entier**
• **Kristian Ambrosch: "Chapter 6 SAD-based Stereo Matching using FGPAs" In: Branislav Kisacanin et al: "Embedded Computer Vision", 1 janvier 2009 (2009-01-01), Springer, XP002698136, pages 121-138, le document en entier**
• **Kristian Ambrosch et al: "Embedded Computer Vision" In: Ahmed N. Belbachir: "Smart Cameras", 1 janvier 2009 (2009-01-01), Springer, XP002698137, pages 137-150, le document en entier**

- "Chapter 3 Flow Estimation" In: Chaabane Djeraba, et al.: "Multi-Modal User Interactions in Controlled Environments", 1 janvier 2010 (2010-01-01), Springer, XP002698138, pages 59-98, le document en entier
- A. Khemlani et al.: "People Counter: Counting of Mostly Static People in Indoor Conditions" In: Caifeng Shan et al.: "Video Analytics for Business Intelligence", 1 janvier 2012 (2012-01-01), Springer, XP008162548, ISBN: 978-3-642-28597-4 pages 133-159, le document en entier
- James W. Davis et al: "Human Detection and Tracking" In: Li: "Encyclopedia of Biometrics", 1 janvier 2009 (2009-01-01), Springer, XP002698199, pages 708-712, page 708, colonne de droite, ligne 26 - ligne 27
- "Pattern Recognition and Machine Vision", 1 janvier 2010 (2010-01-01), Patrick S. Wang et al., River, XP002698139, page 278, phrase 22 - phrase 26
- HARVILLE M: "Stereo person tracking with adaptive plan-view templates of height and occupancy statistics", IMAGE AND VISION COMPUTING, 1 février 2004 (2004-02-01), pages 127-142, XP002335797,
- Tim Van Oosterhout: "Head Detection in Stereo Data for People Counting and Segmentation", VISAPP 2011, 5 mars 2011 (2011-03-05), pages 1-6, XP055065199, Extrait de l'Internet: URL:http://www.digitallifecentre.nl/jos/in dex.php?option=com_docman&task=doc_view &gi d=70 [extrait le 2013-06-04]
- Ivana Mikic: "Human Body Model Acquisition and Tracking Using Voxel Data", International Journal of Computer Vision, vol. 53, no. 3 1 juillet 2003 (2003-07-01), pages 199-223, XP055065208, Extrait de l'Internet: URL:http://homes.di.unimi.it/borghese/Teac hing/IntelligentSystems/Old/IntelligentSys tems_2004_2005/Documents/Vision/03_Human Bo dy_Tracking_MikicTrivediHunter.pdf [extrait le 2013-06-04]

**Description**

**DOMAINE TECHNIQUE DE L'INVENTION**

L'invention se rapporte au domaine de la vision par ordinateur. Plus précisément, l'invention porte sur un procédé de comptage de personnes pour appareil stéréoscopique, en particulier de personnes se déplaçant dans un passage d'une certaine largeur. L'invention concerne également l'appareil de comptage de personnes correspondant.

**ETAT DE LA TECHNIQUE**

On connaît des appareils stéréoscopiques de comptage de personnes comportant deux caméras associées chacune à un système optique. Ces appareils permettent de compter les personnes passant dans le champ de vision des caméras en les discriminant en fonction de leur distance par rapport aux capteurs.

Les systèmes existants détectent généralement les personnes en comparant les objets détectés par rapport à un seuil de distance. De tels systèmes auront donc tendance à procéder au comptage d'objets ayant une hauteur et/ou une forme proche de celle d'un individu qui ne devraient normalement pas être pris en compte par l'appareil.

En outre, ces systèmes connus ne sont pas facilement adaptables à une hauteur d'installation susceptible de varier d'un endroit à un autre. Ils ne fonctionnent également pas de manière suffisamment efficace dans des zones éclairées de manière variable, telles que les verrières, les zones faiblement éclairées, telles que des zones isolées dans un centre commercial, ou dans des zones fortement éclairées comme par exemple à l'extérieur.

Il existe donc le besoin d'un procédé et d'un appareil de comptage pouvant distinguer les individus par rapport à d'autres objets ayant des hauteurs et/ou des formes similaires tout en pouvant s'adapter à des conditions d'installation variables et ce, quelles que soient les conditions d'éclairage de la zone de passage à surveiller.

Le document DARELL T ET AL: "Robust, real time people tracking in open environments using integrated stereo, color, and face detection", VISUAL SURVEILLANCE, 1998, PROCEEDINGS., 1998 IEEE WORKSHOP ON, 2 janvier 1998, pages 26-32 décrit une technique de detection de personnes dans une scène située dans un champ de vision d'un appareil stéréoscopique.

**OBJET DE L'INVENTION**

L'invention vise à répondre à au moins un de ces besoins en proposant un procédé de comptage de personnes dans une scène située dans un champ de vision d'un appareil stéréoscopique, caractérisé en ce qu'il comporte les étapes suivantes:

- générer une image gauche et une image droite à partir de deux caméras associées à des systèmes optiques,
- produire des images, appelées images rectifiées gauche et droite, dans lesquelles un point de la scène correspond à des pixels situés sur une même ligne de l'image rectifiée gauche et de l'image rectifiée droite,
- identifier, pour chaque pixel d'une l'image, le pixel correspondant de la scène dans l'autre image et en déduire une image, dite image des disparités dans laquelle la valeur de chaque pixel correspond à l'écart dans une même ligne entre le rang des pixels correspondants dans les deux images,
- calculer un gradient entre chaque pixel de l'image des disparités et un pixel qui le précède sur une même ligne, et
- détecter une personne en fonction des gradients calculés et assurer le comptage des personnes ainsi détectées.

Selon une mise en oeuvre, le procédé comporte en outre les étapes suivantes:

- comparer les gradients calculés avec une valeur seuil,
- identifier des segments englobant dans une première partie des pixels associés à un gradient supérieur à la valeur seuil correspondant à une croissance de hauteur, des pixels associés à un gradient ayant une valeur absolue inférieure à la valeur seuil correspondant à une hauteur constante et des pixels associés à un gradient inférieur à l'opposé de la valeur seuil correspondant à une décroissance de la hauteur, et
- détecter une personne en fonction notamment du niveau de variation du gradient sur chaque segment et de la position des pixels correspondant à une hauteur constante par rapport au reste du segment.

Selon une mise en oeuvre, pour faciliter l'identification des pixels correspondants de la scène dans les deux images, le procédé comporte l'étape de produire des images, appelées images environnementales gauche et droite, dans lesquelles chaque pixel est défini par rapport aux valeurs des pixels de son voisinage.

Selon une mise en oeuvre, le procédé comporte l'étape de remplacer dans les images rectifiées gauche et droite les valeurs de chaque pixel par une valeur moyenne des pixels contenue dans une fenêtre située autour du pixel dont la valeur est à remplacer avant de produire les images environnementales.

Selon une mise en oeuvre, les images environnementales gauche et droite sont produites en appliquant la méthode CENSUS.

Selon une mise en oeuvre, pour identifier le pixel d'une image correspondant à un pixel cible de l'autre image, le procédé comporte l'étape de calculer un score correspondant à la distance de Hamming pour différents pixels candidats ainsi que l'étape de retenir le plus petit score traduisant la distance la plus courte entre le pixel candidat et le pixel cible.

Selon une mise en oeuvre, l'image des disparités est déterminée à partir de la comparaison entre une première image des disparités gauche vers droite correspondant à un écart dans une même ligne entre le rang de chaque pixel de l'image gauche et le rang de chaque pixel correspondant de la scène de l'image droite, et une deuxième image des disparités droite vers gauche correspondant à l'écart dans une même ligne entre le rang de chaque pixel de l'image droite et le rang de chaque pixel correspondant de a scène de l'image gauche.

Selon une mise en oeuvre, le procédé comporte l'étape de déterminer, à partir de la comparaison entre l'image des disparités gauche vers droite et l'image des disparités droite vers gauche, une image des disparités plus fiable en réalisant les étapes suivantes:

- calculer une première valeur de disparité de chaque pixel à l'aide de l'image des disparités gauche vers droite,
- utiliser la valeur de disparité ainsi calculée pour déterminer une deuxième valeur de disparité correspondante dans l'image des disparités droite vers gauche,
- comparer la valeur absolue de la différence entre ces deux valeurs de disparité avec un seuil, et
- si la valeur absolue est inférieure au seuil alors on considère que la première valeur de disparité est valable et cette première valeur est attribuée au pixel dans l'image des disparités gauche vers droite,
- sinon, si la valeur absolue est supérieure au seuil, alors on considère que la première valeur de disparité préalablement calculée n'est pas correcte et le pixel correspondant n'est pas pris en compte.

Selon une mise en oeuvre, le procédé comporte en outre l'étape de filtrer l'image des disparités à l'aide d'un filtre moyenneur ajoutant, pour chaque pixel de l'image des disparités, la valeur des pixels voisins du pixel puis calculant la moyenne de ces valeurs qui est ensuite attribuée au pixel.

Selon une mise en oeuvre, le procédé comporte en outre l'étape de seuiller les pixels de l'image des disparités en fonction d'une hauteur souhaitée.

Selon une mise en oeuvre, le procédé comporte l'étape de compter une personne comme une personne entrante ou sortante d'une zone configurée en fonction du sens dans lequel la personne traverse un couple ou ensemble de lignes virtuelles préalablement définies par un opérateur lors d'une installation du système.

L'invention a également pour objet un appareil stéréoscopique de comptage des personnes pour la mise en oeuvre du procédé selon l'invention, caractérisé en ce qu'il comporte deux caméras séparées entre elles d'une distance de l'ordre de 20 cm et des systèmes optiques ayant un angle d'ouverture sélectionné parmi une des valeurs suivantes: 35, 70 ou 134 degrés en fonction d'une hauteur d'installation de l'appareil.

Selon une réalisation, l'angle d'ouverture des systèmes optiques vaut 134 degrés pour une hauteur d'installation comprise entre 250 et 400cm, ou 70 degrés pour une hauteur d'installation comprise entre 410 et 750cm, ou 35 degrés pour une hauteur d'installation comprise entre 800 et 1300cm.

## BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.

La figure 1 montre une représentation schématique d'un appareil stéréoscopique de comptage selon l'invention ;

La figure 2 montre un tableau regroupant différentes configurations du système stéréoscopique en fonction de la hauteur de pose du système pour la détection d'une personne mesurant deux mètres;

La figure 3 représente un diagramme des étapes du procédé de comptage des personnes selon l'invention ;

La figure 4a montre une représentation de la transformation d'une image moyennée gauche ou droite à l'aide de la méthode CENSUS;

La figure 4b représente un exemple de mise en oeuvre de la méthode CENSUS sur un pixel de l'image moyennée;

La figure 5 montre un diagramme fonctionnel permettant de comparer un pixel cible d'une image avec des pixels candidats de l'autre image pour sélection du pixel le plus proche suivant la distance de Hamming;

La figure 6 montre un diagramme des étapes permettant de produire une image des disparités unique à partir de la comparaison entre deux images des disparités gauche vers droite et droite vers gauche;

Les éléments identiques, similaires ou analogues conservent la même référence d'une figure à l'autre.

**EP 2 904 543 B1**

**DESCRIPTION D'EXEMPLES DE REALISATION DE L'INVENTION**

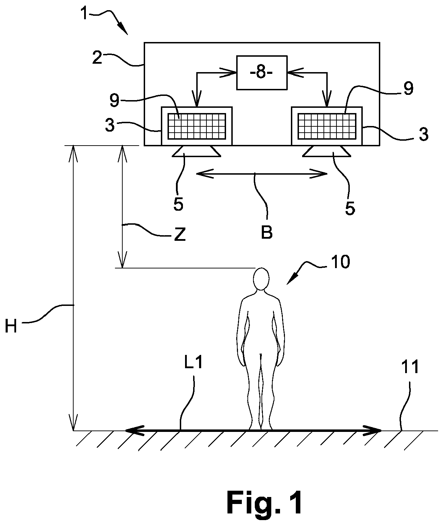

La figure 1 montre un appareil 1 stéréoscopique de comptage de personnes selon l'invention. Cet appareil 1 comporte un boîtier 2 à l'intérieur duquel sont installées deux caméras 3 associées chacune à un système optique 5. Une unité de traitement 8 embarquée à l'intérieur du boîtier 2 permet notamment de traiter en temps réel les différentes images issues des caméras 3 afin d'assurer la détection et le comptage des personnes 10 passant dans le champ de vision des caméras 3.

De préférence, l'appareil de comptage 1 est installé au-dessus d'un passage de largeur L1, le champ de vision des caméras 3 étant dirigé vers le sol 11. La hauteur H d'installation de l'appareil 1 pourra varier entre 2,5 et 13 mètres de haut, comme indiqué ci-après. Cette hauteur H d'installation sera toutefois de préférence comprise entre 2.5 et 7 mètres.

Plus précisément, chaque caméra 3 comporte un capteur 9 ayant une résolution de 1280*720 pixels de 12 bits à 30 images par secondes. Les capteurs 9 sont de préférence de type CMOS noir et blanc. On choisit par exemple des capteurs de grande sensibilité dotés de la technologie HDR ("High Dynamic Resolution" en anglais) qui permet de réduire grandement la saturation des images issues des caméras 3. Les capteurs 9 permettent ainsi d'obtenir une bonne définition de tous les objets ou personnes présents dans le champ de vision des caméras 3.

Par ailleurs, afin de couvrir une large zone de comptage même pour des installations à faible hauteur, les systèmes optiques 5 sont de type grand angle. De préférence, les systèmes optiques 5 auront ainsi un angle d'ouverture de l'ordre de 134 degrés pour des hauteurs basses d'installation et des optiques de 70 degrés pour les grandes hauteurs d'installation. Toutefois, il est également possible d'utiliser des systèmes optiques 5 ayant un angle d'ouverture plus petit, de préférence égal à 35 degrés, pour les très grandes hauteurs, en particulier les hauteurs supérieures à 7 mètres.

Les axes optiques des caméras 3 sont séparés entre eux par une distance B appelée "baseline". Cette baseline est liée à la disparité d des caméras 3 suivant la relation suivante:

$$Z = B*f/d,$$

- Z étant la distance entre un objet et l'appareil 1,
- B étant la distance entre les deux caméras 3,
- f étant la distance focale liée à l'angle d'ouverture des systèmes optiques 5,
- d étant la disparité des caméras 3 correspondant à l'écart de position d'un point physique d'une scène entre les images issues des deux capteurs 9.

De préférence, la distance de séparation B entre les deux caméras vaut 20cm. Une telle valeur permet de conserver un pas supérieur à un pixel de disparité tous les 10 cm de hauteur, et cela tout le long de la hauteur de pose de l'appareil 1, ce qui permet une détection efficace de la tête et des épaules d'un individu comme expliqué ci-après.

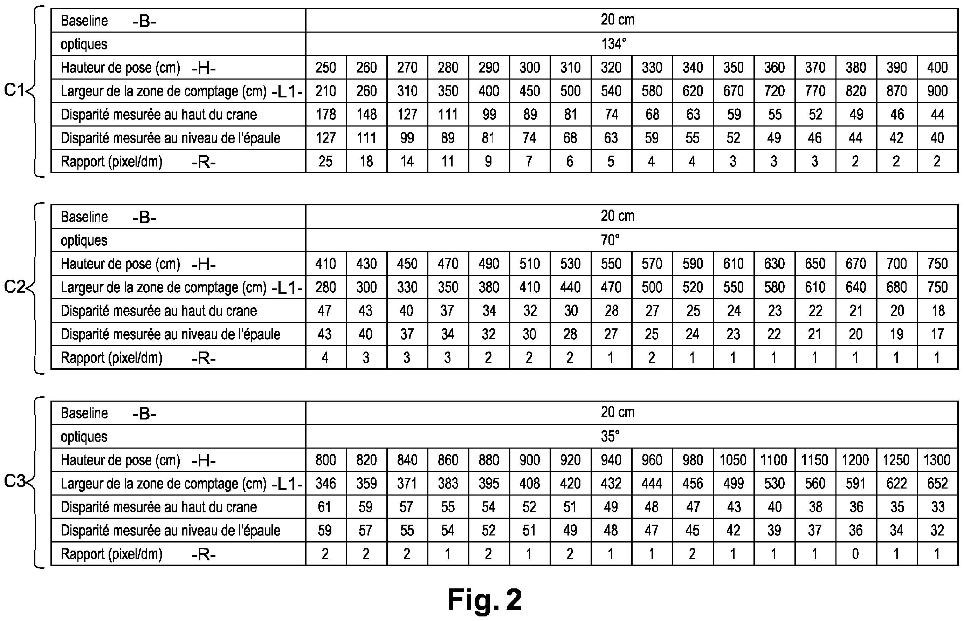

La figure 2 montre différentes configurations de l'appareil 1 en fonction de la hauteur d'installation H dudit appareil 1. Ainsi, dans une première configuration C1 adaptée à une hauteur d'installation H comprise entre 250 et 400cm, la distance B entre les caméras (baseline) est de l'ordre de 20 cm, tandis que les systèmes optiques 5 présentent un angle d'ouverture de 134 degrés. Dans une deuxième configuration C2 adaptée à une hauteur d'installation H comprise entre 410 et 750cm, la distance B entre les caméras (baseline) est de l'ordre de 20 cm tandis que les systèmes optiques 5 présentent un angle d'ouverture de 70 degrés. Dans une troisième configuration adaptée à une hauteur d'installation comprise entre 800 et 1300cm, la distance B entre les caméras (baseline) est de l'ordre de 20 cm tandis que les systèmes optiques 5 présentent un angle d'ouverture de 35 degrés. Il est à noter que de telles configurations permettent d'obtenir lors de la détection d'une personne mesurant deux mètres un rapport R, correspondant à la moitié de la différence entre la disparité mesurée au niveau des épaules et la disparité mesurée au niveau de la tête de la personne, au moins égal à 1 dans la quasi-totalité des configurations envisageables.

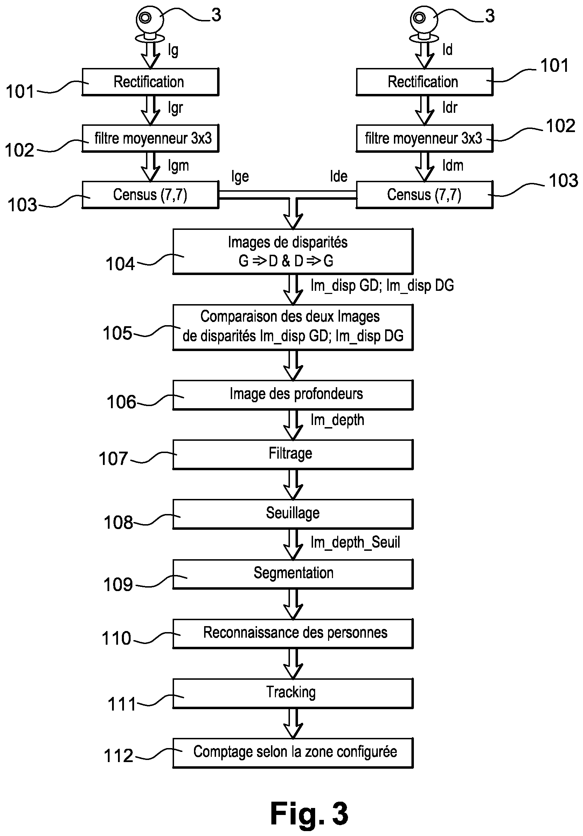

On décrit ci-après, en référence avec la figure 3, les différentes étapes du procédé de comptage selon l'invention de personnes dans une scène située dans le champ de vision des caméras 3. Ces étapes sont mises en oeuvre notamment par l'unité de traitement 8 prenant par exemple la forme d'un calculateur (FPGA) de grande capacité de calcul.

Dans une première étape 101, l'unité de traitement 8 assure une rectification des images issues des capteurs 9, appelées respectivement image gauche Ig et image droite Id. A cet effet, on définit des caméras virtuelles dont les plans images sont alignés l'un par rapport à l'autre. Deux images dites images gauche et droite rectifiées Igr, Idr correspondant aux images que les caméras virtuelles préalablement définies permettraient d'obtenir sont produites à partir des images Ig et Id. Ainsi, un point de la scène située dans le champ de vision des caméras correspond à un pixel de l'image rectifiée Igr et à un pixel de l'image rectifiée Idr, ces deux pixels étant situés sur une même ligne dans les deux images Igr, Idr.

Dans une étape 102, l'unité de traitement 8 applique un filtre, dit filtre moyenneur, sur les images gauche et droite rectifiées Igr, Idr permettant de remplacer la valeur de chaque pixel de ces images par la moyenne des valeurs des pixels de son voisinage. Dans un exemple, on utilise un filtre 3*3 permettant d'ajouter la valeur des 8 pixels autour d'un pixel donné pour en calculer la moyenne. On rajoute des pixels de valeur nulle autour de l'image afin de moyenner tous les pixels de l'image, le but étant de conserver une résolution identique à celle des images rectifiées Igr, Idr. Cette étape 102 permet de limiter les erreurs lors de l'étape 105 de comparaison entre les deux images des disparités. A l'issue de ce traitement, on obtient deux images moyennées gauche Igm et droite Idm. La taille du filtre moyenneur pourra bien entendu varier en fonction de l'application.

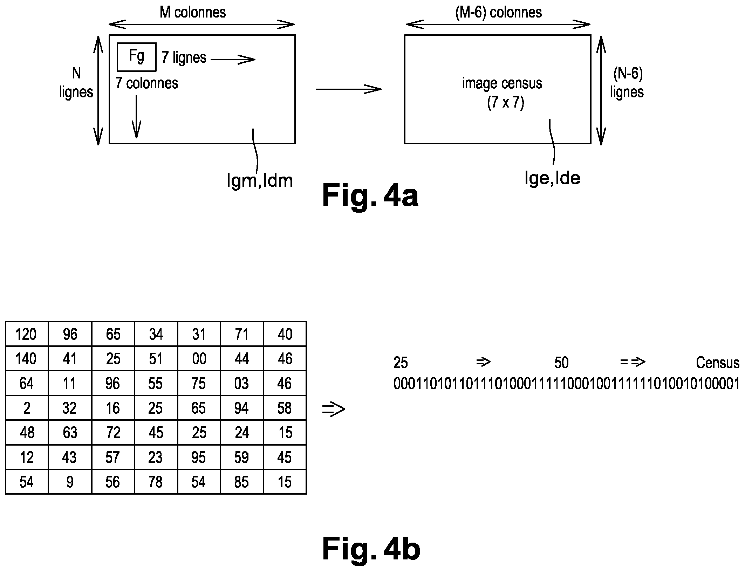

Dans une étape 103, on définit chaque pixel des images gauche et droite moyennée Igm, Idm par rapport à son environnement en mettant par exemple en oeuvre la méthode CENSUS. A cet effet, comme montré sur la figure 4a, l'unité de traitement 8 applique une fenêtre glissante Fg, par exemple de taille 7x7 sur les images moyennées Igm, Idm ayant N lignes et M colonnes. Suivant la méthode CENSUS, la moyenne des valeurs des pixels de la fenêtre entourant un pixel donné est calculée. Puis cette moyenne est comparée avec les valeurs de chaque pixel qui compose la fenêtre de manière à créer un mot égal au nombre des pixels de la fenêtre moins un, chaque bit du mot étant le résultat d'une comparaison. En l'occurrence, on génère pour chaque pixel un mot de 48 bits. On utilise la valeur "1" si la moyenne est supérieure à la valeur du pixel comparé ou la valeur "0" si la moyenne est inférieure ou égale à la valeur du pixel comparé.

Pour illustration, on décrit en référence avec la figure 4b le calcul d'un mot associé au pixel ayant la valeur 25 lors de la mise en oeuvre de la méthode CENSUS avec une matrice 7x7. Plus précisément, on remplace la valeur 25 par 50 qui est la valeur moyenne de tous les pixels de la fenêtre 7x7, puis on compare cette valeur moyenne avec les valeurs des pixels restants de la fenêtre. On obtient alors le mot de 48 bits suivants: 000110101101110100011111000100111110100101 00001.
L'ordre du début et de la fin de la comparaison n'est pas important. Cependant, il faut conserver le même ordre d'un calcul de mot à un autre. En l'occurrence, on part du pixel situé en haut et à gauche et on balaye la fenêtre de gauche à droite et de haut en bas.

Comme visible sur la figure 4a, on obtient à la fin de l'étape 103 des images dites images environnementales gauche Ige et droite Ide ayant M-6 colonnes et N-6 lignes.

L'unité de traitement 8 recherche ensuite pour chaque pixel ayant comme coordonnées (i, j) (i étant le numéro de ligne et j le numéro de la colonne) de l'image environnementale gauche Ige, le pixel correspondant de la scène dans l'image environnementale droite Ide. La recherche du pixel s'effectue dans l'image droite Ide sur la ligne ayant le même indice que le pixel de l'image gauche Ige dont on recherche le correspondant. Cette recherche est effectuée pour un numéro de pixel j' compris entre (j-jFin) et (j-jDeb). Inversement, l'unité de traitement 8 recherche pour chaque pixel de coordonnées (i, j) de l'image environnementale droite Ide son correspondant dans une ligne de l'image environnementale gauche Ige pour des coordonnées de j' compris entre (j+jDeb) et (j+jFin). L'intervalle maximum Dmax=jFin-jDeb est de préférence inférieur ou égal à 130.

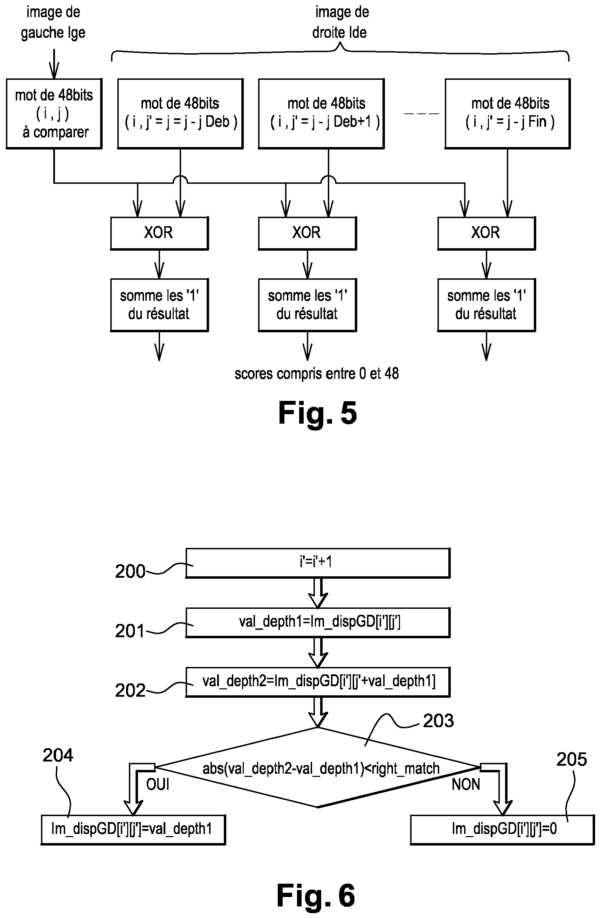

Pour identifier le pixel d'une image correspondant au pixel de l'autre image, l'unité de traitement 8 calcule un score correspondant à la distance de Hamming pour différents pixels candidats et retient ensuite le plus petit score traduisant la distance la plus courte. Ainsi, pour déterminer dans l'image droite Ide le pixel correspondant à un pixel (i, j) dit pixel cible de l'image gauche Ige, on applique comme cela est représenté sur la figure 5 une fonction logique XOR sur le mot du pixel cible i, j et les mots des pixels candidats situés sur la même ligne que le pixel cible et ayant un numéro de colonne compris entre j-jDeb et j-jFin. Le niveau de dissemblance entre le pixel cible et les pixels candidats est représenté par le nombre de "1" présents dans chaque chaîne à la sortie de la fonction XOR correspondant au score de chaque pixel candidat. Le pixel candidat (i, j') auquel est associé le score le moins élevé sera considéré comme étant le pixel de l'image de droite Ide correspondant au pixel cible de l'image de gauche.

Un traitement analogue est effectué pour les pixels de l'image de gauche Ige dont on cherche les pixels correspondants de la scène dans l'image droite Ide en calculant les scores des pixels candidats à l'aide de la distance de Hamming de manière similaire.

On calcule ensuite, dans une étape 104, deux images des disparités, à savoir l'image des disparités de l'image gauche vers l'image droite Im_dispGD et l'image des disparités de l'image droite vers l'image gauche Im_dispDG. Dans chaque image des disparités, chaque pixel en (i, j) correspond à un écart d'indice j entre le pixel d'une image et le pixel correspondant de l'autre image. Ainsi, dans l'image des disparités gauche vers droite im_dispGD, chaque pixel (i, j) correspond à un écart d'indice j entre le pixel de l'image environnementale gauche Ige et le pixel correspondant de l'image environnementale droite Ide déterminé en calculant la distance de Hamming. Dans l'image des disparités droite vers gauche Im_dispDG, chaque pixel (i, j) correspond à un écart d'indice j entre le pixel de l'image environnementale droite Ide et le pixel correspondant de l'image environnementale gauche déterminé en calculant la distance de Hamming.

De préférence, le score le plus faible correspondant à la distance de Hamming la plus courte par rapport au pixel cible est comparé avec un seuil, dit seuil de correspondance seuil_match paramétrable ayant une valeur par exemple comprise entre 0 et 48. Si le score le plus faible est supérieur à la valeur seuil seuil_match, le pixel trouvé est considéré comme incorrect et le pixel correspondant de la carte des disparités n'est pas pris en compte en mettant sa valeur à 0 par exemple.

Par ailleurs, si le score le plus faible du pixel (i, j) a été trouvé plusieurs fois et est inférieur au seuil de correspondance seuil_match, alors on calcule la moyenne de disparité des quatre pixels (i, j-1), (i-1, j-1), (i-1, j), et (i-1, j+1), et on sélectionne le pixel qui présente la disparité la plus proche de cette moyenne.

Dans les étapes 105 et 106, l'unité de traitement 8 détermine, à partir de la comparaison entre l'image des disparités gauche vers droite Im_dispGD et l'image des disparités droite vers gauche Im_dispDG, une image des disparités plus fiable Im_depth. Cette image des disparités est appelée aussi "image des profondeurs" dans la mesure où les écarts entre les rangs des pixels d'une image à une autre correspondent à la hauteur des objets passant dans le champ de vision de l'appareil stéréoscopique.

A cet effet, comme montré sur la figure 6, on calcule, dans une étape 201, la disparité val_depth1 de chaque pixel (i', j') à l'aide de l'image des disparités gauche vers droite Im_dispGD suivant la relation val_depth1=Im_dispGD[i';j'].

La valeur de disparité val_depth1 ainsi calculée est ensuite utilisée pour calculer, dans une étape 202, la valeur de disparité correspondante val_depth2 dans l'image des disparités droite vers gauche Im_dispDG suivant la relation val_depth2=Im_dispDG (i'; j'+val_depth1).

La valeur absolue de la différence entre les valeurs de disparité val_depth1 et val_depth2 est comparée dans une étape 203 avec un seuil right_match défini en fonction de val_depth 1. Dans un exemple, le seuil right_match vaut val_depth1/4.

Si la valeur absolue est inférieure au seuil right_match alors on considère que la valeur de disparité val_depth1 est valable et elle est donc attribuée dans une étape 204 au pixel (i', j') dans l'image des disparités gauche vers droite lm_dispGD.

En revanche, si la valeur absolue est supérieure au seuil right_match alors on considère que la valeur de disparité val_depth1 préalablement calculée n'est pas correcte et le pixel correspondant n'est pas pris en compte en mettant par exemple sa valeur à 0 dans une étape 205. On effectue ensuite une itération dans l'étape 200 pour passer au pixel suivant de la ligne et réitérer les étapes 201-205.

En fonction de l'optique choisie, l'image des disparités Im_depth obtenue est une image de résolution (320-6)*(180-6) ou (1280-6)*(180-6) ou (640-6)*(480-6).

Dans une étape 107, l'image des disparités Im_depth est filtrée en appliquant un filtre moyenneur par exemple de taille (32*32) sur tous les pixels de l'image. Pour chaque pixel de l'image des disparités Im_depth, le filtre ajoute la valeur des pixels voisins, en l'occurrence 1023 pixels, puis calcule la moyenne des valeurs de ces pixels qui est attribuée au pixel. Un contour de l'image, ici de 16 pixels de largeur, ne sera pas pris en compte en mettant par exemple les valeurs de ces pixels à 0 dans la mesure où la moyenne de ces pixels ne pourra pas être calculée.

A la sortie du filtre moyenneur, les pixels sont seuillés dans une étape 108 en fonction de la hauteur souhaitée de manière à traiter uniquement les objets ou personnes ayant une hauteur comprise dans des limites souhaitées par l'installateur. Les pixels à la sortie du seuillage sont nommés Im_depth_Seuil (i), (j).

L'unité de traitement 8 calcule ensuite, dans une étape de segmentation 109, le gradient grad1 entre chaque pixel et un pixel qui le précède, par exemple le cinquième pixel qui le précède, sur une même ligne suivant la relation suivante:

$$\text{lm\_depth\_Seuil}(i)(j) - \text{lm\_depth\_Seuil}(i)(j-5)$$

Le gradient ainsi calculé grad1 est comparé avec une valeur seuil SeuilGrad qui est un seuil prenant une valeur en fonction de la hauteur de pose. On distingue alors trois cas:

Cas a) la valeur de grad1 est supérieure ou égale à SeuilGrad, ce qui correspond à un gradient positif pour une hauteur croissante,

Cas b) la valeur de grad1 est inférieure ou égale -SeuilGrad, ce qui correspond à un gradient négatif pour une hauteur décroissante, et

Cas c) la valeur absolue de grad1 est inférieure à SeuilGrad, ce qui correspond à une hauteur sensiblement constante.

L'étape de segmentation consiste à détecter puis regrouper comme segment un ensemble de pixels vérifiant successivement les cas a), b) et c). Ainsi un segment englobe dans une première partie des pixels vérifiant le cas a) correspondant à une croissance de la hauteur et au début du segment, des pixels ayant un gradient qui vérifient le cas c) correspondant à une hauteur sensiblement constante, et enfin d'autres pixels qui vérifient le cas c) correspondant à une décroissance de la hauteur et indiquant la fin du segment.

Les personnes sont détectées dans une étape 110 en fonction notamment des niveaux de variation du gradient sur un segment donné et de la position des pixels correspondant à une hauteur sensiblement constante par rapport au reste du segment. En effet, un segment correspondant à une personne présentera une variation de gradient particulière en fonction de la hauteur d'installation du système; tandis que les pixels ayant un gradient constant correspondant à la tête de la personne auront une position particulière par rapport aux extrémités du segment qui délimitent les épaules de la personne en vue de dessus ou le reste du corps suivant la position du segment dans le champ de vision des caméras. Il est également possible de prendre en compte la différence entre la hauteur de la tête et la hauteur dans le reste du corps.

Une fois la personne détectée, ses coordonnées sont sauvegardées d'une image à une autre afin de déterminer un sens de déplacement de la personne dans une étape de tracking 111. On identifie la même personne dans deux images successives en comparant les centres des ensembles des corps détectés dans les deux images.

En fonction du sens dans lequel la personne traverse un couple ou ensemble de lignes virtuelles préalablement définies par l'opérateur lors d'une installation du système, la personne sera comptée comme une personne entrante ou sortante de la zone configurée au cours de l'étape 112. De préférence, l'unité de traitement 8 assure également la gestion des cas compliqués de personnes se croisant, se suivant en file indienne, se présentant à plusieurs de front ou faisant des allers-retours.

L'homme du métier pourra bien entendu modifier l'appareil 1 de comptage et le procédé décrits ci-dessus sans sortir du cadre de l'invention. Ainsi, en variante, le capteur CMOS pourrait être remplacé par tout autre capteur adapté à la mise en oeuvre du procédé de détection selon l'invention, comme par exemple un capteur de type CCD. En variante, on met en oeuvre une autre méthode que la méthode CENSUS pour obtenir les images environnementales, telle que les méthodes locales et les méthodes globales et semi-globales. Alternativement, dans une version dégradée du procédé, on supprime les étapes 102 de filtrage et/ou 105, 106 de comparaison des images des disparités (on utilise alors dès le début du procédé une seule image des disparités) et/ou 107 de filtrage et/ou 108 de seuillage et/ou 111 de tracking.

## Revendications

1. Procédé de comptage de personnes dans une scène située dans un champ de vision d'un appareil stéréoscopique (1), **caractérisé en ce qu'**il comporte les étapes suivantes mises en oeuvre par ledit appareil stéréoscopique (1):

   - générer une image gauche (Ig) et une image droite (Id) à partir de deux caméras (3) associées à des systèmes optiques,
   - produire des images (Igr, Idr), appelées images rectifiées gauche et droite, dans lesquelles un point de la scène correspond à des pixels situés sur une même ligne de l'image rectifiée gauche (Igr) et de l'image rectifiée droite (Idr),
   - identifier, pour chaque pixel d'une l'image (Igr, Idr), le pixel correspondant de la scène dans l'autre image et en déduire une image, dite image des disparités (Im_depth) dans laquelle la valeur de chaque pixel correspond à l'écart dans une même ligne entre le rang des pixels correspondants dans les deux images,
   - calculer un gradient (grad1) entre chaque pixel de l'image des disparités (Im_depth) et un pixel qui le précède sur une même ligne,
   - détecter une personne en fonction des gradients (grad1) calculés et assurer le comptage des personnes ainsi détectées,

   et **en ce que** l'image des disparités (Im_depth) est déterminée à partir de la comparaison entre une première image des disparités gauche vers droite (Im_dispGD) correspondant à l'écart dans une même ligne entre un rang de chaque pixel de l'image gauche et le rang de chaque pixel correspondant de la scène dans l'image droite, et une deuxième image des disparités droite vers gauche (Im_dispDG) correspondant à l'écart dans une même ligne entre le rang de chaque pixel de l'image droite et le rang de chaque pixel correspondant de la scène de l'image gauche.

2. Procédé selon la revendication 1, **caractérisé en ce qu'**il comporte en outre les étapes suivantes:

   - comparer les gradients calculés avec une valeur seuil (SeuilGrad),
   - identifier des segments englobant dans une première partie des pixels associé à un gradient (grad1) supérieur à la valeur seuil (SeuilGrad) correspondant à une croissance de hauteur, des pixels associés à un gradient ayant une valeur absolue inférieure à la valeur seuil (SeuilGrad) correspondant à une hauteur constante et des pixels associés à un gradient (grad1) inférieur à l'opposé de la valeur seuil correspondant à une décroissance de la hauteur, et

- détecter une personne en fonction notamment du niveau de variation du gradient (grad1) sur chaque segment et de la position des pixels correspondant à une hauteur constante par rapport au reste du segment.

3. Procédé selon la revendication 1 ou 2, **caractérisé en ce que** pour faciliter l'identification des pixels correspondants de la scène dans les deux images, il comporte l'étape de produire des images, appelées images environnementales gauche (Ige) et droite (Ide), dans lesquelles chaque pixel est défini par rapport aux valeurs des pixels de son voisinage.

4. Procédé selon la revendication 3, **caractérisé en ce qu'**il comporte l'étape de remplacer dans les images rectifiées gauche (Igr) et droite (Idr) les valeurs de chaque pixel par une valeur moyenne des pixels contenue dans une fenêtre située autour du pixel dont la valeur est à remplacer avant de produire les images environnementales.

5. Procédé selon la revendication 3 ou 4, **caractérisé en ce que** les images environnementales gauche (Ige) et droite (Ide) sont produites en appliquant la méthode CENSUS.

6. Procédé selon l'une des revendications 3 à 5, **caractérisé en ce que** pour identifier le pixel d'une image (Igr, Idr) correspondant à un pixel cible de l'autre image, il comporte l'étape de calculer un score correspondant à la distance de Hamming pour différents pixels candidats ainsi que l'étape de retenir le plus petit score traduisant la distance la plus courte entre le pixel candidat et le pixel cible.

7. Procédé selon l'une des revendications 1 à 6, **caractérisé en ce qu'**il comporte l'étape de déterminer, à partir de la comparaison entre l'image des disparités gauche vers droite (Im_dispGD) et l'image des disparités droite vers gauche (Im_dispDG), une image des disparités plus fiable (Im_depth) en réalisant les étapes suivantes:

   - calculer (201) une première valeur de disparité (val_depth1) de chaque pixel à l'aide de l'image des disparités gauche vers droite (Im_dispGD),
   - utiliser la valeur de disparité (val_depth1) ainsi calculée pour déterminer (202) une deuxième valeur de disparité correspondante (val_depth2) dans l'image des disparités droite vers gauche (Im_dispDG),
   - comparer (203) la valeur absolue de la différence entre ces deux valeurs de disparité (val_depth1, val_depth2) avec un seuil (right_match), et
   - si la valeur absolue est inférieure au seuil (right_match) alors on considère que la première valeur de disparité (val_depth1) est valable et cette première valeur est attribuée (204) au pixel dans l'image des disparités gauche vers droite (Im_dispGD),
   - sinon, si la valeur absolue est supérieure au seuil (right_match), alors on considère que la première valeur de disparité (val_depth1) préalablement calculée n'est pas correcte et le pixel correspondant n'est pas pris en compte.

8. Procédé selon l'une des revendications 1 à 7, **caractérisé en ce qu'**il comporte en outre l'étape de filtrer l'image des disparités (Im_depth) à l'aide d'un filtre moyenneur ajoutant, pour chaque pixel de l'image des disparités, la valeur des pixels voisins du pixel puis calculant la moyenne de ces valeurs qui est ensuite attribuée au pixel.

9. Procédé selon l'une des revendications 1 à 8, **caractérisé en ce qu'**il comporte en outre l'étape de seuiller (108) les pixels de l'image des disparités (Im_depth) en fonction d'une hauteur souhaitée.

10. Procédé selon l'une des revendications 1 à 9, **caractérisé en ce qu'**il comporte l'étape de compter une personne (112) comme une personne entrante ou sortante d'une zone configurée en fonction du sens dans lequel la personne traverse un couple de lignes virtuelles préalablement définies par un opérateur lors d'une installation du système.

11. Appareil stéréoscopique de comptage des personnes, **caractérisé en ce qu'**il comporte :

   - des moyens de génération d'une image gauche (Ig) et d'une image droite (Id) à partir de deux caméras (3) associées à des systèmes optiques,
   - des moyens de production desdites images (Igr, Idr), appelées images rectifiées gauche et droite, dans lesquelles un point de la scène correspond à des pixels situés sur une même ligne de l'image rectifiée gauche (Igr) et de l'image rectifiée droite (Idr),
   - des moyens d'identification, pour chaque pixel d'une l'image (Igr, Idr), le pixel correspondant de la scène dans l'autre image et en déduire une image, dite image des disparités (Im_depth) dans laquelle la valeur de chaque pixel correspond à l'écart dans une même ligne entre le rang des pixels correspondants dans les deux images,

- des moyens de calcul d'un gradient (grad1) entre chaque pixel de l'image des disparités (Im_depth) et un pixel qui le précède sur une même ligne,
- des moyens de détection d'une personne en fonction des gradients (grad1) calculés et assurer le comptage des personnes ainsi détectées, et
- des moyens de détermination de ladite image des disparités (Im_depth) à partir de la comparaison entre une première image des disparités gauche vers droite (Im_dispGD) correspondant à l'écart dans une même ligne entre un rang de chaque pixel de l'image gauche et le rang de chaque pixel correspondant de la scène dans l'image droite, et une deuxième image des disparités droite vers gauche (Im_dispDG) correspondant à l'écart dans une même ligne entre le rang de chaque pixel de l'image droite et le rang de chaque pixel correspondant de la scène de l'image gauche.

12. Appareil stéréoscopique selon la revendication 11, **caractérisé en ce que** lesdites deux caméras (3) sont séparées entre elles d'une distance (B) de l'ordre de 20 cm et ledit appareil comporte en outre des systèmes optiques (5) ayant un angle d'ouverture sélectionné parmi une des valeurs suivantes: 35, 70 ou 134 degrés en fonction d'une hauteur d'installation de l'appareil.

13. Appareil stéréoscopique selon la revendication 11 ou 12, **caractérisé en ce que** l'angle d'ouverture des systèmes optiques vaut 134 degrés pour une hauteur d'installation comprise entre 250 et 400 cm, ou 70 degrés pour une hauteur d'installation comprise entre 410 et 750 cm, ou 35 degrés pour une hauteur d'installation comprise entre 800 et 1300 cm.

**Patentansprüche**

1. Verfahren zum Zählen von Personen in einer Szene, die sich in einem Sichtfeld eines stereoskopischen Geräts (1) befindet, **dadurch gekennzeichnet, dass** es die folgenden Schritte aufweist, die vom stereoskopischen Gerät (1) durchgeführt werden:

- Generieren eines linken Bilds (Ig) und eines rechten Bilds (Id) ausgehend von zwei optischen Systemen zugeordneten Kameras (3),
- Erzeugen von Bildern (Igr, Idr), korrigierte linke und rechte Bilder genannt, in denen ein Punkt der Szene Pixeln entspricht, die sich in der gleichen Zeile des linken korrigierten Bilds (Igr) und des rechten korrigierten Bilds (Idr) befinden,
- Erkennen, für jedes Pixel eines Bilds (Igr, Idr), des entsprechenden Pixels der Szene im anderen Bild, und daraus Ableiten eines Bilds, Bild der Disparitäten (Im_depth) genannt, in dem der Wert jedes Pixels der Abweichung in einer gleichen Zeile zwischen dem Rang der entsprechenden Pixel in den zwei Bildern entspricht,
- Berechnen eines Gradienten (grad1) zwischen jedem Pixel des Bilds der Disparitäten (Im_depth) und einem Pixel, das ihm in der gleichen Zeile vorausgeht,
- Erfassen einer Person abhängig von den berechneten Gradienten (grad1) und Gewährleisten des Zählens der so erfassten Personen,

und dass das Bild der Disparitäten (Im_depth) ausgehend vom Vergleich zwischen einem ersten Bild der Disparitäten von links nach rechts (Im_dispGD) entsprechend der Abweichung in einer gleichen Zeile zwischen einem Rang jedes Pixels des linken Bilds und dem Rang jedes entsprechenden Pixels der Szene im rechten Bild und einem zweiten Bild der Disparitäten von rechts nach links (Im_dispDG) bestimmt wird, das der Abweichung in einer gleichen Zeile zwischen dem Rang jedes Pixels des rechten Bilds und dem Rang jedes entsprechenden Pixels der Szene des linken Bilds entspricht.

2. Verfahren nach Anspruch 1, **dadurch gekennzeichnet, dass** es außerdem die folgenden Schritte aufweist:

- Vergleich der berechneten Gradienten mit einem Schwellwert (SeuilGrad),
- Erkennen der Segmente, die in einem ersten Bereich Pixel, die einem Gradienten (grad1) zugeordnet sind, der höher als der Schwellwert (SeuilGrad) entsprechend einem Höhenwachstum ist, Pixel, die einem Gradienten zugeordnet sind, der einen Absolutwert niedriger als der Schwellwert (SeuilGrad) entsprechend einer konstanten Höhe hat, und Pixel umfassen, die einem Gradienten (grad1) zugeordnet sind, der niedriger als der Gegenwert des Schwellwerts ist, der einem Abnehmen der Höhe entspricht, und
- Erfassen einer Person insbesondere abhängig vom Änderungspegel des Gradienten (grad1) in jedem Segment und von der Position der Pixel entsprechend einer konstanten Höhe bezüglich des Rests des Segments.

3. Verfahren nach Anspruch 1 oder 2, **dadurch gekennzeichnet, dass** es zur Vereinfachung der Erkennung der entsprechenden Pixel der Szene in den zwei Bildern den Schritt der Erzeugung von Bildern, linkes (Ige) und rechtes (Ide) Umgebungsbild genannt, aufweist, in denen jedes Pixel bezüglich der Werte der Pixel in seiner Nachbarschaft definiert wird.

4. Verfahren nach Anspruch 3, **dadurch gekennzeichnet, dass** es den Schritt des Ersetzens in den korrigierten linken (Igr) und rechten (Idr) Bildern der Werte jedes Pixels durch einen Mittelwert der Pixel aufweist, der in einem Fenster enthalten ist, das sich um das Pixel herum befindet, dessen Wert zu ersetzen ist, ehe die Umgebungsbilder erzeugt werden.

5. Verfahren nach Anspruch 3 oder 4, **dadurch gekennzeichnet, dass** die linken (Ige) und rechten (Ide) Umgebungsbilder durch Anwendung des CENSUS-Verfahrens erzeugt werden.

6. Verfahren nach einem der Ansprüche 3 bis 5, **dadurch gekennzeichnet, dass** es zur Erkennung des Pixels eines Bilds (Igr, Idr) entsprechend einem Zielpixel des anderen Bilds den Schritt der Berechnung eines Score entsprechend der Hamming-Distanz für verschiedene Kandidat-Pixel sowie den Schritt des Zurückbehaltens des kleinsten Score aufweist, der die kürzeste Distanz zwischen dem Kandidat-Pixel und dem Ziel-Pixel ausdrückt.

7. Verfahren nach einem der Ansprüche 1 bis 6, **dadurch gekennzeichnet, dass** es den Schritt aufweist, ausgehend vom Vergleich zwischen dem Bild der Disparitäten von links nach rechts (Im_dispGD) und dem Bild der Disparitäten von rechts nach links (Im_dispDG) ein zuverlässigeres Bild der Disparitäten (Im_depth) zu bestimmen, indem die folgenden Schritte durchgeführt werden:

   - Berechnen (201) eines ersten Disparitätswerts (val_depth1) jedes Pixels mit Hilfe des Bilds der Disparitäten von links nach rechts (Im_dispGD),
   - Verwenden des so berechneten Disparitätswerts (val_depth1), um einen zweiten entsprechenden Disparitätswert (val_depth2) im Bild der Disparitäten von rechts nach links (Im_dispDG) zu bestimmen (202),
   - Vergleichen (203) des Absolutwerts der Differenz zwischen diesen zwei Disparitätswerten (val_depth1, val_depth2) mit einem Schwellwert (right_match), und
   - wenn der Absolutwert niedriger als der Schwellwert (right_match) ist, angenommen wird, dass der erste Disparitätswert (val_depth1) gültig ist, und dieser erste Wert dem Pixel im Bild der Disparitäten von links nach rechts (Im_dispGD) zugeteilt wird (204),
   - sonst, wenn der Absolutwert höher als der Schwellwert (right_match) ist, angenommen wird, dass der vorher berechnete erste Disparitätswert (val_depth1) nicht korrekt ist, und das entsprechende Pixel wird nicht berücksichtigt.

8. Verfahren nach einem der Ansprüche 1 bis 7, **dadurch gekennzeichnet, dass** es außerdem den Schritt des Filterns des Bilds der Disparitäten (Im_depth) mit Hilfe eines Mittelwertfilters aufweist, der für jedes Pixel des Bilds der Disparitäten den Wert der Nachbarpixel des Pixels hinzufügt, dann den Mittelwert dieser Werte berechnet, der anschließend dem Pixel zugewiesen wird.

9. Verfahren nach einem der Ansprüche 1 bis 8, **dadurch gekennzeichnet, dass** es außerdem den Schritt der Schwellwertsetzung (108) der Pixel des Bilds der Disparitäten (Im_depth) abhängig von einer gewünschten Höhe aufweist.

10. Verfahren nach einem der Ansprüche 1 bis 9, **dadurch gekennzeichnet, dass** es den Schritt des Zählens einer Person (112) als eintretende oder austretende Person einer Zone aufweist, die abhängig von der Richtung konfiguriert ist, in der die Person ein Paar von virtuellen Zeilen durchquert, die vorab von einem Operator bei einer Installierung des Systems definiert wurden.

11. Stereoskopisches Gerät zum Zählen von Personen, **dadurch gekennzeichnet, dass** es aufweist:

   - Einrichtungen zur Generierung eines linken Bilds (Ig) und eines rechten Bilds (Id) ausgehend von zwei Kameras (3), die optischen Systemen zugeordnet sind,
   - Einrichtungen zur Erzeugung der Bilder (Igr, Idr), die korrigierte linke und rechte Bilder genannt werden, in denen ein Punkt der Szene Pixeln entspricht, die sich in der gleichen Zeile des linken korrigierten Bilds (Igr) und des rechten korrigierten Bilds (Idr) befinden,
   - Einrichtungen zur Erkennung, für jedes Pixel eines Bilds (Igr, Idr), des entsprechenden Pixels der Szene im anderen Bild, und zum Ableiten eines Bilds, Bild der Disparitäten (Im_depth) genannt, in dem der Wert jedes Pixels der Abweichung in einer gleichen Zeile zwischen dem Rang der entsprechenden Pixel in den zwei Bildern entspricht,

- Einrichtungen zur Berechnung eines Gradienten (grad1) zwischen jedem Pixel des Bilds der Disparitäten (Im_depth) und einem Pixel, das ihm in der gleichen Zeile vorausgeht,

- Einrichtungen zur Erfassung einer Person abhängig von den berechneten Gradienten (grad1) und Gewährleistung des Zählens der so erfassten Personen, und

- Einrichtungen zur Bestimmung des Bilds der Disparitäten (Im_depth) ausgehend vom Vergleich zwischen einem ersten Bild der Disparitäten von links nach rechts (Im_dispGD) entsprechend der Abweichung in einer gleichen Zeile zwischen einem Rang jedes Pixels des linken Bilds und dem Rang jedes entsprechenden Pixels der Szene im rechten Bild und einem zweiten Bild der Disparitäten von rechts nach links (Im_dispDG) entsprechend der Abweichung in einer gleichen Zeile zwischen dem Rang jedes Pixels des rechten Bilds und dem Rang jedes entsprechenden Pixels der Szene des linken Bilds.

12. Stereoskopisches Gerät nach Anspruch 11, **dadurch gekennzeichnet, dass** die zwei Kameras (3) einen Abstand (B) zueinander in der Größenordnung von 20 cm haben und das Gerät außerdem optische Systeme (5) aufweist, die einen Öffnungswinkel haben, der unter einem der folgenden Werte ausgewählt wird: 35, 70 oder 134 Grad, abhängig von einer Einbauhöhe des Geräts.

13. Stereoskopisches Gerät nach Anspruch 11 oder 12, **dadurch gekennzeichnet, dass** der Öffnungswinkel der optischen Systeme 134 Grad für eine Einbauhöhe zwischen 250 und 400 cm oder 70 Grad für eine Einbauhöhe zwischen 410 und 750 cm oder 35 Grad für eine Einbauhöhe zwischen 800 und 1300 cm beträgt.

## Claims

1. Method for counting persons in a scene located in a field of view of a stereoscopic device (1), **characterized in that** it includes the following steps implemented by said stereoscopic device (1):

   - generating a left image (Ig) and a right image (Id) from two video cameras (3) associated with optical systems;
   - producing images (Igr, Idr), called left and right rectified images, in which one point of the scene corresponds to pixels located in a given row of the left rectified image (Igr) and of the right rectified image (Idr);
   - identifying, for each pixel of an image (Igr, Idr), the corresponding pixel of the scene in the other image and deducing therefrom an image, called the image of disparities (Im_depth), in which the value of each pixel corresponds to the divergence in a given row between the rank of the corresponding pixels in the two images;
   - calculating a gradient (grad1) between each pixel of the image of disparities (Im_depth) and a pixel that precedes it in a given row;
   - detecting a person depending on the calculated gradients (grad1) and counting the persons thus detected;

   and **in that** the image of disparities (Im_depth) is determined from the comparison of a first image of left to right disparities (Im_dispGD) corresponding to the divergence in a given row between a rank of each pixel of the left image and the rank of each corresponding pixel of the scene in the right image, and a second image of right to left disparities (Im_dispDG) corresponding to the divergence in a given row between the rank of each pixel of the right image and the rank of each corresponding pixel of the scene of the left image.

2. Method according to Claim 1, **characterized in that** it furthermore includes the following steps:

   - comparing the calculated gradients with a threshold value (SeuilGrad);
   - identifying segments encompassing in a first portion pixels associated with a gradient (grad1) higher than the threshold value (SeuilGrad) corresponding to a height increase, pixels associated with a gradient having an absolute value lower than the threshold value (SeuilGrad) corresponding to a constant height and pixels associated with a gradient (grad1) lower than the opposite of the threshold value corresponding to a decrease in height; and
   - detecting a person depending in particular on the level of variation in the gradient (grad1) in each segment and on the position of the pixels corresponding to a constant height with respect to the rest of the segment.

3. Method according to Claim 1 or 2, **characterized in that** to facilitate the identification of the corresponding pixels of the scene in the two images, it includes the step of producing images, called left and right environmental images (Ige, Ide), in which each pixel is defined with respect to the values of the neighbouring pixels.

4. Method according to Claim 3, **characterized in that** it includes the step of replacing in the left and right rectified images (Igr, Idr) the values of each pixel with an average value of the pixels contained in a window located around the pixel the value of which is to be replaced before producing the environmental images.

5. Method according to Claim 3 or 4, **characterized in that** the left and right environmental images (Ige, Ide) are produced by applying the CENSUS method.

6. Method according to one of Claims 3 to 5, **characterized in that** to identify the pixel of an image (Igr, Idr) corresponding to a target pixel of the other image, it includes the step of calculating a score corresponding to the Hamming distance for various candidate pixels and the step of retaining the lowest score indicating the smallest distance between the candidate pixel and the target pixel.

7. Method according to one of Claims 1 to 6, **characterized in that** it includes the step of determining, from the comparison of the image of left to right disparities (Im_dispGD) and the image of right to left disparities (Im_dispDG), a more reliable image of disparities (Im_depth) by carrying out the following steps:

- calculating (201) a first disparity value (val_depth1) for each pixel using the image of left to right disparities (Im_dispGD);
- using the disparity value (val_depth1) thus calculated to determine (202) a corresponding second disparity value (val_depth2) in the image of right to left disparities (Im_dispDG);
- comparing (203) the absolute value of the difference between these two disparity values (val_depth1, val_depth2) with a threshold (right_match); and
- if the absolute value is lower than the threshold (right_match) then the first disparity value (val_depth1) is considered to be valid and this first value is attributed (204) to the pixel in the image of left to right disparities (Im_dispGD);
- else, if the absolute value is higher than the threshold (right_match), then the first disparity value (val_depth1) calculated beforehand is considered not to be correct and the corresponding pixel is not taken into account.

8. Method according to one of Claims 1 to 7, **characterized in that** it furthermore includes the step of filtering the image of disparities (Im_depth) using an averaging filtrer that adds, for each pixel of the image of disparities, the value of the pixels neighbouring the pixel and then calculates the average of these values, which average is then attributed to the pixel.

9. Method according to one of Claims 1 to 8, **characterized in that** it furthermore includes the step of thresholding (108) the pixels of the image of disparities (Im_depth) depending on a desired height.

10. Method according to one of Claims 1 to 9, **characterized in that** it includes the step of counting a person (112) as a person entering or exiting a configured zone depending on the direction in which the person passes through a pair of virtual rows defined beforehand by an operator during an installation of the system.

11. Stereoscopic device for counting persons, **characterized in that** it includes:

- means for generating a left image (Ig) and a right image (Id) from two video cameras (3) associated with optical systems;
- means for producing said images (Igr, Idr), called left and right rectified images, in which one point of the scene corresponds to pixels located in a given row of the left rectified image (Igr) and of the right rectified image (Idr);
- means for identifying, for each pixel of an image (Igr, Idr), the corresponding pixel of the scene in the other image and deducing therefrom an image, called the image of disparities (Im_depth), in which the value of each pixel corresponds to the divergence in a given row between the rank of the corresponding pixels in the two images;
- means for calculating a gradient (grad1) between each pixel of the image of disparities (Im_depth) and a pixel that precedes it in a given row;
- means for detecting a person depending on the calculated gradients (grad1) and counting the persons thus detected; and
- means for determining said image of disparities (Im_depth) from the comparison of a first image of left to right disparities (Im_dispGD) corresponding to the divergence in a given row between a rank of each pixel of the left image and the rank of each corresponding pixel of the scene in the right image, and a second image of right to left disparities (Im_dispDG) corresponding to the divergence in a given row between the rank of each pixel of the right image and the rank of each corresponding pixel of the scene of the left image.

**12.** Stereoscopic device according to Claim 11, **characterized in that** said two video cameras (3) are separated from each other by a distance (B) of about 20 cm and said device furthermore includes optical systems (5) having an angular aperture selected from one of the following values: 35, 70 or 134 degrees depending on a height of installation of the device.

**13.** Stereoscopic device according to Claim 11 or 12, **characterized in that** the angular aperture of the optical systems is 134 degrees for a height of installation comprised between 250 and 400 cm, or 70 degrees for a height of installation comprised between 410 and 750 cm, or 35 degrees for a height of installation comprised between 800 and 1300 cm.

**Fig. 1**

**C1**

| Baseline -B- | 20 cm | | | | | | | | | | | | | | | |
|---|---|---|---|---|---|---|---|---|---|---|---|---|---|---|---|---|
| optiques | 134° | | | | | | | | | | | | | | | |
| Hauteur de pose (cm) -H- | 250 | 260 | 270 | 280 | 290 | 300 | 310 | 320 | 330 | 340 | 350 | 360 | 370 | 380 | 390 | 400 |
| Largeur de la zone de comptage (cm) -L1- | 210 | 260 | 310 | 350 | 400 | 450 | 500 | 540 | 580 | 620 | 670 | 720 | 770 | 820 | 870 | 900 |
| Disparité mesurée au haut du crane | 178 | 148 | 127 | 111 | 99 | 89 | 81 | 74 | 68 | 63 | 59 | 55 | 52 | 49 | 46 | 44 |
| Disparité mesurée au niveau de l'épaule | 127 | 111 | 99 | 89 | 81 | 74 | 68 | 63 | 59 | 55 | 52 | 49 | 46 | 44 | 42 | 40 |
| Rapport (pixel/dm) -R- | 25 | 18 | 14 | 11 | 9 | 7 | 6 | 5 | 4 | 4 | 3 | 3 | 3 | 2 | 2 | 2 |

**C2**

| Baseline -B- | 20 cm | | | | | | | | | | | | | | | |
|---|---|---|---|---|---|---|---|---|---|---|---|---|---|---|---|---|
| optiques | 70° | | | | | | | | | | | | | | | |
| Hauteur de pose (cm) -H- | 410 | 430 | 450 | 470 | 490 | 510 | 530 | 550 | 570 | 590 | 610 | 630 | 650 | 670 | 700 | 750 |
| Largeur de la zone de comptage (cm) -L1- | 280 | 300 | 330 | 350 | 380 | 410 | 440 | 470 | 500 | 520 | 550 | 580 | 610 | 640 | 680 | 750 |
| Disparité mesurée au haut du crane | 47 | 43 | 40 | 37 | 34 | 32 | 30 | 28 | 27 | 25 | 24 | 23 | 22 | 21 | 20 | 18 |
| Disparité mesurée au niveau de l'épaule | 43 | 40 | 37 | 34 | 32 | 30 | 28 | 27 | 25 | 24 | 23 | 22 | 21 | 20 | 19 | 17 |
| Rapport (pixel/dm) -R- | 4 | 3 | 3 | 3 | 2 | 2 | 2 | 1 | 2 | 1 | 1 | 1 | 1 | 1 | 1 | 1 |

**C3**

| Baseline -B- | 20 cm | | | | | | | | | | | | | | | |
|---|---|---|---|---|---|---|---|---|---|---|---|---|---|---|---|---|
| optiques | 35° | | | | | | | | | | | | | | | |
| Hauteur de pose (cm) -H- | 800 | 820 | 840 | 860 | 880 | 900 | 920 | 940 | 960 | 980 | 1050 | 1100 | 1150 | 1200 | 1250 | 1300 |
| Largeur de la zone de comptage (cm) -L1- | 346 | 359 | 371 | 383 | 395 | 408 | 420 | 432 | 444 | 456 | 499 | 530 | 560 | 591 | 622 | 652 |
| Disparité mesurée au haut du crane | 61 | 59 | 57 | 55 | 54 | 52 | 51 | 49 | 48 | 47 | 43 | 40 | 38 | 36 | 35 | 33 |
| Disparité mesurée au niveau de l'épaule | 59 | 57 | 55 | 54 | 52 | 51 | 49 | 48 | 47 | 45 | 42 | 39 | 37 | 36 | 34 | 32 |
| Rapport (pixel/dm) -R- | 2 | 2 | 2 | 1 | 2 | 1 | 2 | 1 | 1 | 2 | 1 | 1 | 1 | 0 | 1 | 1 |

**Fig. 2**

EP 2 904 543 B1

**Fig. 3**

EP 2 904 543 B1

M colonnes

N lignes

Fg | 7 lignes →

7 colonnes

Igm,Idm

(M-6) colonnes

image census
(7 x 7)

(N-6) lignes

Ige,Ide

# Fig. 4a

| 120 | 96 | 65 | 34 | 31 | 71 | 40 |
|-----|-----|-----|-----|-----|-----|-----|
| 140 | 41 | 25 | 51 | 00 | 44 | 46 |
| 64 | 11 | 96 | 55 | 75 | 03 | 46 |
| 2 | 32 | 16 | 25 | 65 | 94 | 58 |
| 48 | 63 | 72 | 45 | 25 | 24 | 15 |
| 12 | 43 | 57 | 23 | 95 | 59 | 45 |
| 54 | 9 | 56 | 78 | 54 | 85 | 15 |

⇒

25   ⇒   50   =⇒   Census
0001101011011101000111110001001111110100010100001

# Fig. 4b

image de
gauche Ige

image de
droite Ide

| mot de 48bits<br>( i , j )<br>à comparer | mot de 48bits<br>( i , j' = j - j Deb ) | mot de 48bits<br>( i , j' = j - j Deb+1 ) | – – – | mot de 48bits<br>( i , j' = j - j Fin ) |

XOR      XOR      XOR

somme les '1'
du résultat    somme les '1'
du résultat    somme les '1'
du résultat

scores compris entre 0 et 48

# Fig. 5

200    i'=i'+1

201    val_depth1=Im_dispGD[i'][j']

202    val_depth2=Im_dispGD[i'][j'+val_depth1]

203    abs(val_depth2-val_depth1)<right_match

204    OUI        NON    205

Im_dispGD[i'][j']=val_depth1      Im_dispGD[i'][j']=0

# Fig. 6

**RÉFÉRENCES CITÉES DANS LA DESCRIPTION**

**Littérature non-brevet citée dans la description**

- **DARELL T et al.** Robust, real time people tracking in open environments using integrated stereo, color, and face detection. *VISUAL SURVEILLANCE, 1998, PROCEEDINGS., 1998 IEEE WORKSHOP ON,* 02 Janvier 1998, 26-32